# EUROPEAN PATENT SPECIFICATION

(11) **EP 4 015 201 B1**
(45) Date of publication and mention of the grant of the patent: **13.09.2023**
(21) Application number: 21212496.0
(22) Date of filing: 06.12.2021
(51) Int. Cl.: B29D 30/00, B29D 30/02

(54) **PROCESS FOR THE PRODUCTION OF A NON-PNEUMATIC TIRE**
VERFAHREN ZUR HERSTELLUNG EINES LUFTLOSEN REIFENS
PROCÉDÉ DE PRODUCTION D'UN BANDAGE NON PNEUMATIQUE

(30) Priority: 18.12.2020 US 202063127556 P
(43) Date of publication of application: 22.06.2022
(73) Proprietor: The Goodyear Tire & Rubber Company, Akron, OH 44316 (US)
(72) Inventor: SPORTELLI, Francesco, 3249 Bettembourg (LU); SIFFER, Frederic Gerard Auguste, 7542 Mersch (LU)
(74) Representative: Kutsch, Bernd

(56) References cited:
- US-A1- 2007 044 894
- US-A1- 2009 155 604
- US-B2- 10 569 600

## Description

### Field of the Invention

This invention relates to a process for producing tires, such as non-pneumatic tires, and in particular to a process for co-vulcanization of a rubber material to a thermoplastic surface, such as a shear band of a non-pneumatic tire to a structure or connecting structure of a non-pneumatic tire, for instance to a spoke.

### Background of the Invention

While pneumatic tires are widely used in view of a plurality of advantages, such as the ability to carry high loads and allowing comfortable ride, a drawback of pneumatic tires consists in that they require constant inflation pressure.

A tire designed to operate without inflation pressure may eliminate problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a highly beneficial improvement.

Non-pneumatic tires may be made by assembling various rubber and non-rubber based elements. A non-pneumatic tire typically comprises a central hub connected to the wheel, a reinforced annular band or shear band that supports the load on the tire and a plurality of web spokes or connecting structures. The shear band transfers the load from the bottom of the tire which is in contact with the ground to the spokes and the hub via the connecting structures. The shear band is commonly provided with or surrounded by a radially outer ground engaging tread including relief patterns designed to improve performance of the tire.

The connecting structures may be straight or curved and are preferably oriented in the radial direction. They are commonly flat bands formed of an elastic material such as rubber or a thermoplastic elastomer. The spokes are primarily loaded in tension and shear and must form a robust assembly with the shear band that lasts at least the life-time of the tire.

In a common assembly process of non-pneumatic tires, the connecting structures are connected to the rubber of the shear band by adhesion and co-vulcanization.

Processes to promote adhesion of polymeric surface comprise treatment with bonding glues such as a polyisocyanate adhesive layer before the co-vulcanization. An example of such an adhesive system is described in United States Patent 10,569,600. However, the use of adhesives is expensive and a solution is to be found to reduce costs and complexity and to increase durability under tire service conditions. It is therefore desirable to develop a process for co-vulcanization that avoids the use of adhesives such as the use of a polyisocyanate adhesive layer or the like, and therefore a process to assembly a non-pneumatic tire that is simple and cost-efficient. It is therefore desirable to develop a process for co-vulcanization that contributes to produce tires with increased durability under tire service conditions.

### Summary of the Invention

One or more of the above needs can be met by the process according to the disclosure wherein the surface of the structure of a non-pneumatic tire or of an element of said structure, such as a strip, a plate or a connecting structure that comprises or does not comprise said element is functionalized with a layer of atmospheric plasma deposited polymer to allow its co-vulcanization with rubber.

According to a first aspect, the invention is directed to a process according to independent claim 1.

According to a second aspect, the present invention is directed to a process according to independent claim 15.

For example, the process according to the second aspect of the invention is a process for the co-vulcanization of a plate or a strip comprising thermoplastic material with a rubber material for the production of a non-pneumatic tire.

The process according to the first aspect, the second aspect is preferably devoid of a step of application of an adhesive layer, such as a polyisocyanate adhesive layer, on the structure, the plate, the strip, the connecting structure made of thermoplastic material or comprising a thermoplastic material.

Preferred features and/or embodiments to further define the process according to the first aspect, the second aspect and the third aspect are provided herein below.

One or more of the structure, the plate, the strip and the connecting structure can comprised a thermoplastic material.

In an embodiment, the structure comprises a connecting structure, one or more plates, one or more strips and any combination thereof. In another example, the structure is a connecting structure, optionally comprising one or more plates, one or more strips and any combination thereof. For example, the structure or connecting structure comprises one or more plates, or one or more strips, or a combination thereof, so that the surface intended to be brought into contact with a shear band is at least partially plane and/or annular. For example, the structure or connecting structure comprises connecting reinforcement members comprising at their radially outer end one or more plates, or one or more strips, or a combination thereof, so that the surface intended to be brought into contact with a shear band is at least partially plane and/or annular.

In another embodiment, the structure comprises one or more annular strips forming one or more outer cylinders, the one or more outer cylinders being connected to an inner cylinder through a connecting structure comprising a plurality of connecting reinforcement members, and wherein the outside surface of one or more outer cylinders in the tire radial direction is the surface intended to be brought into contact with a shear band.

In yet another embodiment, the structure comprises a thermoplastic material or is made of a thermoplastic material. In an embodiment, the connecting structure or the plate or the strip comprises a thermoplastic material or is made of a thermoplastic material.

In still another embodiment, the structure is made of a composite material comprising at least a thermoplastic material and one or more (reinforcing) fillers. For example, the connecting structure or the plate or the strip is made of a composite material comprising a thermoplastic material and one or more (reinforcing) fillers.

In another embodiment, one or more (reinforcing) fillers are selected from talc mineral filler, wollastonite, calcium carbonate, silica, carbon black, graphite, graphene, carbon nanotubes, polyparaphenylene terephthalamide fibers (i.e., Kevlar fibers); polyester fibers, hybrid fibers, carbon fibers, polyamide fibers, polyethylene terephthalate fibers, glass fibers, bamboo fibers, flax fibers and hemp fibers.

In still another embodiment, the composite material comprises at least 30 weight percent of thermoplastic material, based on the total weight of the composite material; for example, at least 40 weight percent; for example, at least 50 weight percent; for example, at least 60 weight percent; for example, at least 70 weight percent; for example, at least 80 weight percent.

In still another embodiment, the composite material comprises from 30 weight percent to 95 weight percent of thermoplastic material, based on the total weight of the composite material; for example, from 40 weight percent to 90 weight percent; for example from 50 to weight percent 80 weight percent.

In another embodiment, the structure or the connecting structure or the strip or the plate further comprises one or more non-thermoplastic reinforcements selected from wires, metal cords and fabric cords. For example, the structure or the connecting structure or the strip or the plate holds or carries one or more tire sensors.

In another embodiment, the structure or the connecting structure or the strip or the plate comprises a surface layer made of the thermoplastic material or of a composite material comprising the thermoplastic material, wherein the surface layer is or has the surface intended to be brought into contact with a shear band. For example, the surface layer has a thickness of at least 0.5 mm, or at least 1.0 mm, or at least 1.5 mm, or at least 2 mm. The thickness of the surface layer can be determined using a gauge caliper.

In an embodiment, the structure or the connecting structure or the plate or the strip is a part of a tire, for example, a non-pneumatic tire. For example, the plate or the strip comprising a thermoplastic material or made of thermoplastic material is a part of a connecting structure or forms a connecting structure of a non-pneumatic tire.

In another embodiment, the thermoplastic material is one or more selected from thermoplastic elastomers, polyamides, polyesters, polyketones, polyurethanes, and polyaramids.

In another embodiment, the thermoplastic material has: a tensile modulus of at least 200 MPa as determined by ISO 527-1/-2; for example, of at least 250 MPa; and/or a Shore D Hardness (3s) ranging from 30 to 85 as determined by ISO 868; for example, ranging from 40 to 75; for example, ranging from 45 to 70; or ranging from 50 to 65.

In another embodiment, the thermoplastic material is or comprises one or more thermoplastic elastomers selected from polyester-based thermoplastic elastomers (TPC/TPE), polyamide-based thermoplastic elastomers (TPA), polyolefin-based thermoplastic elastomers (TPO), and polystyrene-based thermoplastic elastomers (TPS). For example, the thermoplastic material is or comprises one or more polyester-based thermoplastic elastomers.

In an embodiment, the structure or the plate or the strip or the connecting structure is made of or comprises a polyester-based thermoplastic elastomer and the polyester-based thermoplastic elastomer preferably has one or more of:
a Shore D Hardness (3s) ranging from 30 to 85 as determined by ISO 868; for example, ranging from 40 to 75; for example, ranging from 45 to 70 or ranging from 50 to 65;
a tensile modulus of at least 200 MPa as determined by ISO 527-1/-2; for example, of at least 250 MPa; and/or
a melt flow rate ranging from 1 to 50 g/10 min as determined by ISO 1133 (230°C - 2.16 kg); for example, from 2 to 25 g/ 10 min, or from 3 to 15 g /10 min.

### Pretreatment

In an embodiment the step of pretreating includes a sub-step of roughening the surface and/or an optional step of cleaning the surface. For example, a sub-step of polishing the surface with a polishing machine is performed before the sub-step of roughening. When present, the sub-step of roughening the surface can be performed using sandpaper.

In another embodiment, in which a step of pretreating includes a sub-step of roughening the surface, the pretreated surface has a roughness average parameter Ra ranging from 0.2 micrometers to 50.0 micrometers; for example, from 0.5 micrometers to 20.0 micrometers; for example, from 1.0 micrometers to 10.0 micrometers. The roughness Ra is determined by analyzing the surface of a roughened sample with an Atomic Force Microscope (AFM).

In an embodiment, the step of pretreating includes a sub-step of roughening the surface followed by one or more sub-steps selected from solvent cleaning and air plasma activation. For example, the sub-step of cleaning the surface is performed with a solvent, preferably a polar solvent. For example, the solvent or the polar solvent is selected from methyl ethyl ketone (MEK), acetone, isopropanol (IPA), toluene or a mixture thereof.

In an embodiment, the step of pretreating includes a sub-step of air plasma activation and the step of depositing a plasma polymerized coating layer from the atmospheric pressure plasma is performed at most 30 min after performing the sub-step of air plasma activation. For example, the sub-step of air plasma activation is carried out with one or more of:
a nozzle displacement velocity ranging from 1 to 20 m/ min; for example, ranging from 1.5 to 10 m/ min or ranging from 2 to 5 m/ min;
a nozzle offset ranging from 1 to 10 mm; for example, ranging from 1.5 to 8 mm or ranging from 2 to 5 mm; and
a gap between the nozzle and the surface ranging from 0.1 to 5 mm; for example, ranging from 0.5 to 4 mm or ranging from 0.7 to 3 mm.

A number of plasma coating passes ranging from 1 to 5; for example, 1 to 3, can be used.

### Atmospheric pressure plasma / step of depositing a plasma polymer coating layer from the atmospheric pressure plasma

In an embodiment, the gas mixture comprises a carrier gas and a precursor comprising one or more sulfur-containing compounds. For example, the gas mixture comprises a carrier gas and a precursor comprising one or more sulfur-containing compounds and optionally an alkyne.

In an embodiment, the carrier gas is selected from helium, argon, xenon, neon, nitrogen, carbon dioxide, nitrous oxide, carbon monoxide, air and any mixture thereof; preferably, the carrier gas is selected from argon and/or air.

In an embodiment, the one or more sulfur-containing compounds are selected from elemental sulfur, carbon disulfide, carbonyl sulfide, thiophene, dimethyl sulfide, diethyl sulfide, methyl ethyl sulfide, dimethyldisulfide, diethyldisulfide, methyl ethyl disulfide, diphenyldisulfide, chloromethyl methyl sulfide, thiobenzophenone, 1, 3, 5-trithiane, thioformaldehyde and any mixture thereof. With preference, the one or more sulfur-containing compounds are selected from elemental sulfur, carbon disulfide and any mixture thereof.

In an embodiment, the precursor further comprises an alkyne; with preference, the alkyne is one or more C₂ to C₁₀ alkynes selected from acetylene, propyne, 1-butyne, 2-butyne, 1-pentyne, 2-pentyne, 3-methylbut-1-yne, 1-hexyne, 2-hexyne, 3-hexyne, 3,3-dimethylbut-1-yne, 1-heptyne and isomers, 1-octyne and isomers, 1-nonyne and isomers, and 1-decyne and isomers. A preferred alkyne is acetylene.

For example, the coated surface comprises a plasma polymerized coating layer wherein the thickness of the plasma polymerized coating layer ranges from 0.001 to 20 µm as determined with a profilometer; for example, ranging from 0.01 to 15 µm; for example, ranging from 0.1 to 10 µm. The profilometer can be a commercially available optical white light profilometer, also named interferometer, such devices are well known to the person skilled in the art.

In an embodiment, the step of depositing a plasma polymerized coating layer from the atmospheric pressure plasma is performed using an atmospheric pressure plasma system comprising a nozzle wherein:
the nozzle displacement velocity ranges from 1 to 20 m/ min, or from 1.5 to 10 m/ min or from 2 to 5 m/ min; and/or wherein
the nozzle offset ranges from 1 to 10 mm, from 1.5 to 8 mm or from 2 to 5 mm; and/or wherein
the gap between the nozzle and the pretreated surface is ranges from 0.1 to 5 mm, from 0.5 to 4 mm or from 0.7 to 3 mm. The number of plasma coating passes employed can range from 1 to 5, for example, from 1 to 3.

In an embodiment, the step of depositing a plasma polymerized coating layer from the atmospheric pressure plasma is performed using an atmospheric pressure plasma system comprising a nozzle comprising a cylindrical body having a longitudinal axis and a bottom end, the body comprising a conical inlet coaxial with the longitudinal axis for receiving a plasma, a radial inlet for receiving a precursor material, a core outlet coaxial with the longitudinal axis for receiving plasma from the conical inlet and a toroidal outlet for receiving the precursor material from the radial inlet, wherein an inner sidewall of the toroidal outlet extends only a part of the way to the bottom end of the nozzle (i.e. does not extend all the way to the bottom end of the nozzle), and an outer sidewall of the toroidal outlet extends to the bottom end of the nozzle.

### The rubber material

In an embodiment, the rubber material comprises one or more diene-based elastomers; preferably selected from a styrene-butadiene rubber, a polybutadiene rubber, a natural rubber, a synthetic polyisoprene rubber or combinations thereof. In an embodiment, the rubber material is a rubber composition comprising at least 25 phr of natural rubber, for example at least 30 phr, for example at least 40 phr, or for example at least 50 phr.

In an embodiment, the rubber material consists of or comprises a rubber composition comprising one or more of the following:
50 phr to 100 phr of natural rubber;
0 phr to 50 phr of synthetic polyisoprene;
25 phr to 80 phr of at least one filler (preferably 25 phr to 65 phr of silica and from 1 phr to 15 phr of carbon black; or from 20 phr to 40 phr of silica and from 1 phr to 40 phr of carbon black, preferably from 2 phr to 30 phr of carbon black);
optionally 0.1 phr to 5 phr of a cobalt salt, preferably 0.2 phr to 3 phr of a cobalt salt;
3 phr to 15 phr of zinc oxide, preferably from 5 phr to 15 phr of zinc oxide;
1 phr to 15 phr of a silane, preferably 2 phr to 10 phr of a silane; and
1 phr to 10 phr of sulfur, preferably 3 phr to 10 phr of sulfur.

In an embodiment, the rubber composition may be essentially resin free. However, in other embodiments, the composition may include resins as mentioned herein below.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber.

In an embodiment, the rubber material is a wire coat composition or a compound suitable for wire coating. In an embodiment, the layer of rubber material has a thickness ranging from 0.3 mm to 3.0 mm. The thickness of the rubber material can be determined by a gauge caliper.

According to a fourth aspect of the present invention, a tire is provided, such as a non-pneumatic tire, which is produced by the process according to one of the first aspect, the second aspect or the third aspect.

According to a fifth aspect, the present invention is directed to a tire comprising a structure and at least one layer of rubber material wherein the structure comprises a thermoplastic material or made of a thermoplastic material, the structure comprising a surface; wherein the layer of rubber material is in contact with the surface of the structure and wherein the surface of the structure is co-vulcanized with the layer of rubber material. For example, the present invention is directed to a non-pneumatic tire, comprising a structure and a shear band wherein the structure comprises a thermoplastic material or is made of a thermoplastic material, wherein the structure further comprises a surface, wherein the shear band has a layer of rubber material in contact with the surface of the structure and wherein the surface of the structure is co-vulcanized with the layer of rubber material of the shear band.

In an embodiment, the tire or the non-pneumatic tire is devoid of an adhesive layer placed between the surface of the structure and the layer of rubber material of the shear band; with preference, it is devoid of a polyisocyanate adhesive layer.

In an embodiment, the structure comprises a connecting structure, one or more plates, one or more strips or any combination thereof.

In another embodiment, the connecting structure comprises connecting reinforcement members comprising at their radial outer end one or more plates, or one or more strips or a combination thereof, preferably so that the surface intended to be brought into contact with a shear band is at least partially plane or annular.

In an embodiment, the structure comprises one or more annular strips forming one or more outer cylinders, the one or more outer cylinders being connected to an inner cylinder by means of a connecting structure comprising a plurality of connecting reinforcement members, and wherein the outside surface of one or more outer cylinders in the tire radial direction is the surface intended to be brought into contact with a shear band.

In another embodiment, the structure or the plate or the strip or the connecting structure comprises a thermoplastic material or is made of a thermoplastic material that is selected from one or more of thermoplastic elastomers, polyamides, polyesters, polyketones, polyurethanes, and polyaramids. Preferably, the thermoplastic material has:
a tensile modulus of at least 200 MPa as determined by ISO 527-1/-2, for example, of at least 250 MPa; and/or
a Shore D Hardness (3s) ranging from 30 to 85 as determined by ISO 868, for example ranging from 40 to 75, for example ranging from 45 to 70 or ranging from 50 to 65.

In another embodiment, the thermoplastic material is or comprises one or more thermoplastic elastomers selected from polyester-based thermoplastic elastomers (TPC/TPE), polyamide-based thermoplastic elastomers (TPA), polyolefin-based thermoplastic elastomers (TPO), and polystyrene-based thermoplastic elastomers (TPS). For example, the thermoplastic material is or comprises one or more polyester-based thermoplastic elastomers.

In an embodiment, the structure or the plate or the strip or the connecting structure is made of or comprises a polyester-based thermoplastic elastomer. Preferably, the polyester-based thermoplastic elastomer has one or more of:
a Shore D Hardness (3s) ranging from 30 to 85 as determined by ISO 868; for example, ranging from 40 to 75; for example, ranging from 45 to 70 or ranging from 50 to 65;
a tensile modulus of at least 200 MPa as determined by ISO 527-1/-2; for example, of at least 250 MPa;
a melt flow rate ranging from 1 to 50 g / 10 min as determined by ISO 1133 (230°C - 2.16 kg); for example, from 2 to 25 g / 10 min, or from 3 to 15 g / 10 min.

In an embodiment, the structure comprises a thermoplastic material or is made of a thermoplastic material.

In an embodiment, the connecting structure or the plate or the strip comprises a thermoplastic material or is made of a thermoplastic material.

For example, the structure comprises a thermoplastic material or is made of a thermoplastic material.

In an embodiment, the connecting structure or the plate or the strip comprises a thermoplastic material or is made of a thermoplastic material.

In another embodiment, the structure is made of a composite material comprising a thermoplastic material and one or more (reinforcing) fillers.

In yet another embodiment, the connecting structure or the plate or the strip is made of a composite material comprising a thermoplastic material and one or more (reinforcing) fillers.

In still another embodiment, one or more fillers are selected from talc mineral filler, wollastonite, calcium carbonate, silica, carbon black, graphite, graphene, carbon nanotubes, polyparaphenylene terephthalamide fibers (i.e., Kevlar fibers); polyester fibers, hybrid fibers, carbon fibers, polyamide fibers, polyethylene terephthalate fibers, glass fibers, bamboo fibers, flax fibers and hemp fibers.

In another embodiment, the composite material comprises at least 30 weight percent of thermoplastic material, based on the total weight of the composite material or for example, at least 40 weight percent, or at least 50 weight percent, or at least 60 weight percent or at least 70 weight percent or at least 80 weight percent.

In another embodiment, the composite material comprises from 30 weight percent to 95 weight percent of thermoplastic material, based on the total weight of the composite material, for example from 40 weight percent to 90 weight percent, or for example from 50 weight percent to 80 weight percent.

In yet another embodiment, the structure, the connecting structure, the strip or the plate further comprises one or more non-thermoplastic reinforcements selected from wires, metal cords and fabric cords.

In an embodiment, the structure, the connecting structure, the strip, or the plate holds one or more tire sensors.

In another embodiment, the structure, the connecting structure, the strip, or the plate comprises a surface layer made of the thermoplastic material or of a composite material comprising the thermoplastic material, wherein the surface layer is the surface intended to be brought into contact with a shear band.

In still another embodiment, the surface layer has a thickness of at least 0.5 mm, at least 1.0 mm, at least 1.5 mm, or at least 2 mm. The thickness of the surface layer can be determined using a gauge caliper.

A plurality of optional embodiments of the rubber layer and its composition have been provided herein above in relation to other aspects of the invention and are also combinable with the present fifth aspect of the invention or further aspects of the invention mentioned herein.

The tire or the non-pneumatic tire according to the fifth aspect is preferably a non-pneumatic tire according to the fourth aspect, i.e., a tire or a non-pneumatic tire that is produced by the process according to any one of the first aspect, the second aspect or the third aspect.

The particular features, structures, characteristics or embodiments may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements or method steps.

The recitation of endpoints also includes the recited endpoint values themselves (e.g., from 1.0 to 5.0 includes both 1.0 and 5.0).

"Radial direction" of the tire means lines or directions that are perpendicular to the axis of rotation of the tire.

"Thermoplastic elastomer" means an elastomer comprising a thermo reversible network.

A tire, a non-pneumatic tire and a process to produce a tire or a non-pneumatic tire are described jointly. Thus, any information regarding the process can be used to define the tire or the non-pneumatic tire and vice-versa.

### Brief Description of the Drawings

Figure 1 is a schematic illustration of an atmospheric pressure plasma system
Figure 2 is a schematic representation of a plasma nozzle
Figure 3 is a partial perspective view of a non-pneumatic tire according to an embodiment of the present invention.

### Detailed Description of the Embodiments

In one embodiment of the invention, a process for the co-vulcanization of i) a structure, e.g. a connecting structure, comprising a plate or a strip made of thermoplastic material, or comprising a thermoplastic material, with ii) a rubber material, is provided, wherein the process comprises the steps of:
providing a structure comprising a plate or a strip with a surface intended to be submitted to co-vulcanization, wherein the plate or the strip comprises a thermoplastic material;
pretreating the surface of the plate or the strip to obtain a pretreated surface;
providing an atmospheric pressure plasma generated from a gas mixture;
depositing a plasma polymerized coating layer from the atmospheric pressure plasma on the pretreated surface to produce a strip or a plate with a coated surface comprising a plasma polymerized coating layer;
providing a rubber material and depositing a layer of said rubber material on the coated surface of the plate or the strip (or in other words contacting a layer of said rubber material with the coated surface); and
performing a co-vulcanization of the plate or the strip with the rubber material.

For example, said structure, or member, comprising the plate or the strip made of or comprising a thermoplastic material is a part of a tire such as a non-pneumatic tire or is part of a tire assembly. For example, the structure comprising the plate or strip holds one or more tire sensors. It is possible, that the plate or strip is integrally formed with a sensor housing to hold a sensor.

For example, the process according to the present disclosure is a process for the co-vulcanization of a plate or a strip comprising thermoplastic material with a rubber material for the production of a tire, for example, for the production of a non-pneumatic tire.

An example of a non-pneumatic tire is provided in EP3238957. This document shows an example of a shear band suitable for use in the present process such as a shear band comprising a three-dimensional spacer structure, wherein the three-dimensional spacer structure comprises or is formed from a first and second layer of material, each layer of material having first reinforcement members which extend in a first and direction, and second reinforcement members which extend in a second direction, wherein each layer of material is connected by a plurality of connecting reinforcement members which extend in a third direction. The three-dimensional spacer structure is positioned between at least a first and a second layer of rubber material. In the present disclosure, one of the layers of rubber of a shear band is fixed to the structure of the non-pneumatic tire by co-vulcanization.

Thus, in particular, a process for the production of a non-pneumatic tire comprising a structure and a shear band is provided, wherein the process comprises the steps of:
providing a structure having a surface intended to be put or brought into contact with (or to be connected to) a shear band wherein the structure comprises a thermoplastic material;
pretreating the surface of the structure to obtain a pretreated surface; providing an atmospheric pressure plasma generated from a gas mixture;
depositing a plasma polymerized coating layer from the atmospheric pressure plasma on the pretreated surface to produce a structure with a coated surface comprising a plasma polymerized coating layer;
providing a shear band with a layer of rubber material and contacting the coated surface of the structure with said layer of rubber material; and
co-vulcanizing the treated surface of the coated surface of the structure with the layer of rubber material of the shear band.

In an embodiment, the layer of rubber material has a thickness ranging from 0.3 to 3.0 mm.

For example, the structure comprises a connecting structure, one or more plates, one or more strips, or any combination thereof.

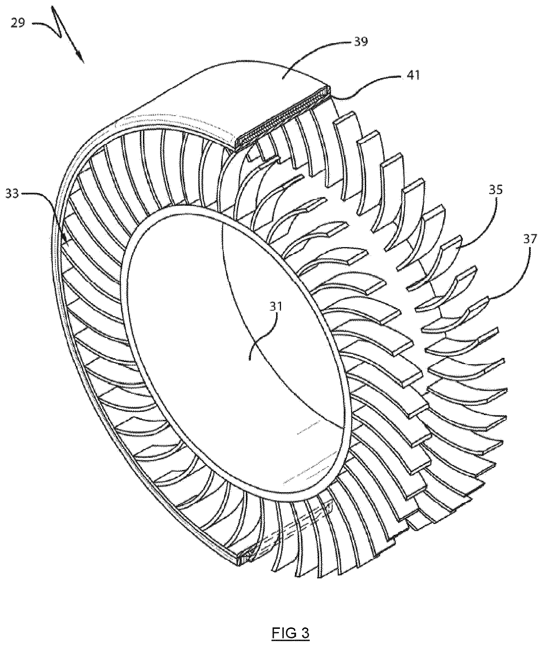

A non-limiting embodiment of a non-pneumatic tire according to the present disclosure is illustrated in **Figure 3****.** The non-pneumatic tire 29 comprises a structure and a shear band 39. In the illustrated example, the structure is comprising a hub 31 (or inner cylinder 31), a connecting structure 33 that comprises a plurality of connecting reinforcement (or reinforced) members or 35 (such as spokes) having a radially outer end 37 forming a surface that is in contact with the shear band 39 and particular to a layer 41 of rubber material of the shear band 39. In this example, the connecting structure 33 connects the hub 31 with the shear band 39.

In an embodiment not illustrated, the connecting structure comprises connecting reinforcement (or reinforced) members comprising at their radially outer end one or more plates, or one or more strips, or a combination thereof, so that the surface intended to be brought into contact with a shear band is at least partially plane or annular.

In another embodiment not illustrated, the structure comprises one or more annular strips forming one or more outer cylinders, the one or more outer cylinders being connected to an inner cylinder (or hub) through a connecting structure comprising a plurality of connecting reinforcement members (such as spokes), and wherein the outside surface of one or more outer cylinders in the tire radial direction is the surface intended to be brought into contact with a shear band.

For example, the structure comprises a thermoplastic material or is made of a thermoplastic material. In an embodiment, the connecting structure or the plate or the strip is comprising a thermoplastic material or is made of a thermoplastic material. For example, the structure is made of a composite material comprising a thermoplastic material and one or more fillers. For example, the connecting structure or the plate or the strip is made of a composite material comprising a thermoplastic material and one or more fillers. Fillers may be selected from talc mineral filler, wollastonite, calcium carbonate, silica, carbon black, graphite, graphene, carbon nanotubes, polyparaphenylene terephthalamide fibers (i.e., Kevlar fibers); polyester fibers, hybrid fibers, carbon fibers, polyamide fibers, polyethylene terephthalate fibers, glass fibers, bamboo fibers, flax fibers and hemp fibers.

For example, the composite material comprises at least 30 weight percent of thermoplastic material, based on the total weight of the composite material, for example, at least 40 weight percent, for example, at least 50 weight percent, for example, at least 60 weight percent, for example, at least 70 weight percent, or for example, at least 80 weight percent.

In an embodiment, the composite material comprises from 30 weight percent to 95 weight percent of thermoplastic material, based on the total weight of the composite material, for example from 40 weight percent to 90 weight percent, for example from 50 weight percent to 80 weight percent.

The structure or the connecting structure or the strip or the plate further can further comprise one or more non-thermoplastic reinforcements selected from wires, metal cords and fabric cords.

In an embodiment, the structure or the connecting structure comprising a plate or strip holds one or more tire sensors. Thus, it may connect the sensor to the shear band or rubber layer, e.g. of the tire.

The structure or the connecting structure or the strip or the plate may comprise a surface layer made of the thermoplastic material or of a composite material comprising the thermoplastic material, wherein the surface layer is the surface intended to be brought into contact with a shear band. For example, the surface layer has a thickness of at least 0.5 mm, for example at least 1.0 mm, for example, at least 1.5 mm, or for example, at least 2 mm.

In an embodiment, the structure, the plate or the strip or the connecting structure comprises a thermoplastic material or is made of a thermoplastic material, wherein the thermoplastic material is one or more selected from thermoplastic elastomers, polyamides, polyesters, polyketones, polyurethanes, and polyaramids. With preference, the thermoplastic material has a tensile modulus of at least 200 MPa as determined by ISO 527-1/-2, for example of at least 250 MPa; and/or a Shore D Hardness (3s) ranging from 30 to 85 as determined by ISO 868; for example ranging from 40 to 75; for example ranging from 45 to 70 or ranging from 50 to 65.

The thermoplastic material may be or comprise one or more thermoplastic elastomers selected from polyester-based thermoplastic elastomers (TPC/TPE), polyamide-based thermoplastic elastomers (TPA), polyolefin-based thermoplastic elastomers (TPO), and polystyrene-based thermoplastic elastomers (TPS). For example, the thermoplastic material is or comprises one or more polyester-based thermoplastic elastomers.

In another embodiment, the structure or the plate or the strip or the connecting structure comprises a polyester-based thermoplastic elastomer or is made of a polyester-based thermoplastic elastomer wherein, preferably, the polyester-based thermoplastic elastomer has a Shore D Hardness (3s) ranging from 30 to 85 as determined by ISO 868, for example, ranging from 40 to 75, for example, ranging from 45 to 70 or ranging from 50 to 65. In addition or alternatively, the polyester-based thermoplastic elastomer has a tensile modulus of at least 200 MPa as determined by ISO 527-1/-2; for example, of at least 250 MPa. In addition or alternatively, the polyester-based thermoplastic elastomer has a melt flow rate ranging from 1 to 50 g / 10 min as determined by ISO 1133 (230°C - 2.16 kg) or for example, from 2 to 25 g /10 min or from 3 to 15 g /10 min.

Examples of suitable thermoplastic materials comprise commercially available by DSM products as sold under the trade name ArnitelTM EM630, ArnitelTM PM581, ArnitelTM EM460, ArnitelTM PL581, ArnitelTM PL461, ArnitelTM ID2060 HT; or by DuPont De Nemours as sold under the trade name HytrelTM 6356.
Before the deposition of the plasma polymerized coating layer, the surface of the structure, the strip, the plate or the connecting structure is preferably subject to a pretreatment step to obtain a pretreated surface.

The step of pretreating may include one or more sub-steps selected from roughening the surface; cleaning the surface; and air plasma activation of the surface.

It is preferred that the step of pretreating includes at least a sub-step of roughening the surface. The pretreated surface has preferably a roughness average parameter Ra ranging from 0.2 micrometers to 50.0 micrometers, or from 0.5 micrometers to 20.0 micrometers, or from 1.0 micrometers to 10.0 micrometers.

The sub-step of roughening the surface, when present, is preferably carried out with sand paper. For example, a sub-step of polishing the surface with a polishing machine is performed before the sub-step of roughening. If present, the sub-step of cleaning the surface is performed with a solvent, preferably a polar solvent. The solvent or the polar solvent may be selected from methyl ethyl ketone (MEK), acetone, isopropanol (IPA), toluene or any mixture thereof. If present, the sub-step of cleaning the surface is performed after the sub-step of roughening the surface.

If a sub-step of air plasma activation of the surface is carried out, the pretreated surface becomes hydrophilic, and hydrophilic groups are created (such as alcohols, aldehydes, acids, ketones, etc.) that favor the chemical bonding of the plasma polymerized coating layer to the thermoplastic material.

If present, the sub-step of air plasma activation of the surface can be carried out with an atmospheric pressure plasma system comprising a nozzle. For example, the nozzle displacement velocity is ranging from 1 to 20 m/min, for example, ranging from 1.5 to 10 m/min or ranging from 2 to 5 m/min. For example, the nozzle offset is ranging from 1 to 10 mm; for example, ranging from 1.5 mm to 8 mm or ranging from 2 mm to 5 mm. For example, the gap or gap width between the nozzle and the surface is ranging from 0.1 mm to 5 mm, from 0.5 mm to 4 mm, or from 0.7 mm to 3 mm. The number of plasma coating passes may range from 1 to 5, or from 1 to 3. If present, the sub-step of air plasma activation is preferably performed after the sub-step of roughening the surface; and more preferably after the sub-step of cleaning the surface.

In an embodiment, the step of pretreating includes a sub-step of air plasma activation and the step of depositing a plasma polymerized coating layer from the atmospheric pressure plasma is carried out at most 30 minutes, with preference at most 20 minutes, after having carried out the sub-step of air plasma activation.

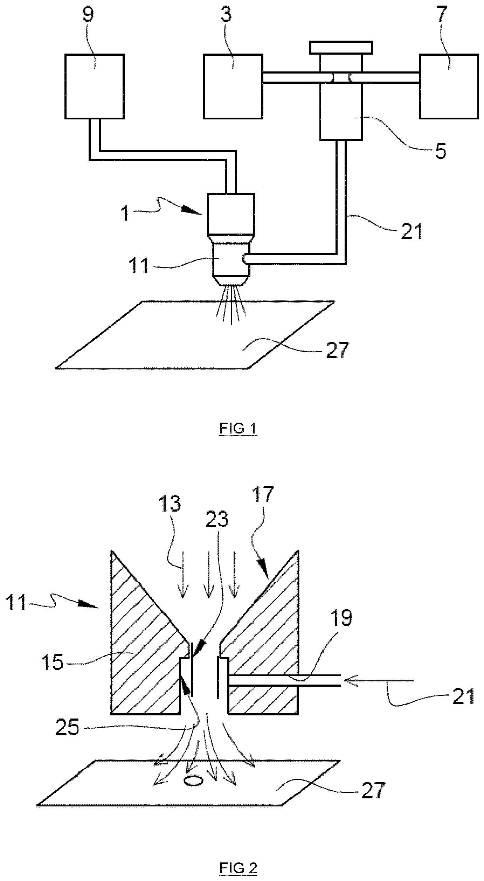

Referring to **Figure 1****,** in an example of an atmospheric pressure air plasma (APAP) system 1, polymerizable material in the form of a monomer or of a precursor comprising one or more sulfur-containing compounds and an optional alkyne in a feedstock vessel 3 may be supplied in a metering tube using a mass flow controller (not shown) and vaporized and mixed with a carrier gas in mixing chamber 5. The carrier gas may be supplied from a carrier gas feedstock vessel 7 and introduced through a meter into the mixing chamber 5. This mixture may be introduced into an atmospheric pressure air plasma apparatus containing a plasma of ionized gas. The ionized gas may come from or supplied by an ionization gas feedstock vessel 9, preferably through a metering device.

Gradients of monomers may be developed where an additional feedstock vessel (not shown) holding other monomers feeds through a supply line to the monomer feedstock vessel to incrementally adjust the ratio or ratios of the monomers in the feedstock. Other monomers may be fed through a supply line to a metering device that may be adjusted incrementally or step-wise based on the ratio or ratios of monomers.

Suitable ionization gases of the atmospheric pressure air plasma system may include but are not limited to, noble gases, oxygen, nitrogen, hydrogen, carbon dioxide, or combinations thereof. The ionization gas may also be a nitrous oxide, which may allow the obtaining of a highly oxidizing plasma without the use of oxygen or air. Suitable carrier gases include any of the noble gases including helium, argon, xenon, and neon. Also, suitable as carrier gas are nitrogen, carbon dioxide, nitrous oxide, carbon monoxide, or air. In a preferred example, the carrier gas can be argon and/or air.

For example, the one or more sulfur-containing compounds are selected from elemental sulfur, carbon disulfide, carbonyl sulfide, thiophene, dimethyl sulfide, diethyl sulfide, methyl ethyl sulfide, dimethyldisulfide, diethyldisulfide, methyl ethyl disulfide, diphenyldisulfide, chloromethyl methyl sulfide, thiobenzophenone, 1, 3, 5-trithiane, thioformaldehyde and any mixture thereof. With preference, the sulfur-containing compound is selected from elemental sulfur, carbon disulfide and any mixture thereof.

In an embodiment, the precursor further comprises an alkyne; with preference, the alkyne is one or more C₂ to C₁₀ alkynes selected from acetylene, propyne, 1-butyne, 2-butyne, 1-pentyne, 2-pentyne, 3-methylbut-1-yne, 1-hexyne, 2-hexyne, 3-hexyne, 3,3-dimethylbut-1-yne, 1-heptyne and isomers, 1-octyne and isomers, 1-nonyne and isomers, and 1-decyne and isomers. With preference, the alkyne is or comprises acetylene.

In one embodiment, the sulfur-containing compound and alkyne are present in a volume ratio sulfur-containing compound/alkyne in a range of from 0.1 to 10. In one embodiment, the sulfur-containing compound and alkyne are present in a volume ratio sulfur-containing compound/alkyne in a range of from 0.8 to 3.

In one embodiment, the sulfur-containing compound and alkyne are present in a volume ratio (sulfur-containing compound + alkyne) / carrier gas in a range of from 0.001 to 0.2. In one embodiment, the sulfur-containing compound and alkyne are present in a volume ratio (sulfur-containing compound + alkyne) / carrier gas in a range of from 0.005 to 0.15.

The plasma generator may be any suitable plasma generation device as known in the art to generate atmospheric pressure plasmas, such as atmospheric pressure plasma jet, atmospheric pressure microwave glow discharge, atmospheric pressure glow discharge, and atmospheric dielectric barrier discharge. In one embodiment, the plasma generator is of the dielectric barrier discharge type. The dielectric barrier discharge apparatus generally includes two electrodes with a dielectric-insulating layer disposed between the electrodes and operates at about atmospheric pressures. For instance, a dielectric barrier discharge apparatus does not provide one single plasma discharge but instead provides a series of short-lived, self-terminating arcs, which on a long-timescale (greater than a microsecond), appears as a stable, continuous, and homogeneous plasma. The dielectric layer serves to ensure termination of the arc.

As known in the art, by atmospheric pressure plasma, it is meant that the pressure of the plasma is (essentially) equal to or slightly above the ambient pressure of the surroundings.

In an embodiment, the step of depositing a plasma polymerized coating layer from the atmospheric pressure plasma is carried out by using an atmospheric pressure plasma system comprising a specific nozzle as described in EP2326153. The use of said nozzle may improve the adhesion performance between the thermoplastic material and the rubber material by delaying mixing of the monomer with the carrier gas when producing and applying the plasma polymerized coating layer.

Reference is made to **Figure 2** for further description of the nozzle 11. The nozzle 11 is comprising a cylindrical body 15 having a longitudinal axis and a bottom end, the body comprising a conical inlet 17 coaxial with the longitudinal axis for receiving a plasma 13, a radial inlet 19 for receiving gas mixture 21, a core outlet 23 coaxial with the longitudinal axis for receiving plasma 13 from the conical inlet 17 and a toroidal outlet 25 for receiving the gas mixture 21 from the radial inlet 19, wherein an inner sidewall of the toroidal outlet 25 extends only a part of the way to the bottom end of the nozzle 11 (i.e. does not extend all the way to the bottom end of the nozzle 11), and an outer sidewall of the toroidal outlet 25 extends to the bottom end of the nozzle 11.

For example, the nozzle 11 or the body 15 is constructed of a ceramic material. In particular, a ceramic nozzle 11 is less prone to abrasion by the plasma 13 than a metallic nozzle. For example, an axially inner end of the toroidal outlet is closed. For example, the radial inlet 19 has a cylindrical shape. The radial inlet 19 may be oriented perpendicularly or at least substantially perpendicularly to the longitudinal axis. For example, the radial inlet 19 extends through the cylindrical body to the toroidal outlet 25. The outer sidewall of the toroidal outlet 25 may extend a first distance in the direction of the longitudinal axis from an axially inner end of the toroidal outlet 25 to the bottom end of the nozzle 11, wherein the inner sidewall of the toroidal outlet 25 extends over a second distance in the direction of the longitudinal axis, and wherein the second distance is smaller than the first distance. With preference, the second distance is in a range of from 40% to 90% of the first distance or more preferably, in a range of from 50% to 70% of the first distance. For example, the bottom end of the nozzle 11 and the bottom end of the outer sidewall of the toroidal outlet 25 are flush. For example, the inner sidewall of the toroidal outlet 25 extends over the second distance from the axially inner end of the toroidal outlet 25 towards the bottom end of the nozzle 11. For example, the nozzle 11 allows at least a partial mixing of the plasma and the precursor within the nozzle 11 or before deposition of a plasma polymerized coating layer onto the surface of the substrate 27.

In an embodiment, the process uses the specific nozzle 11 as defined above and comprises the step of transporting the precursor through the radial inlet 19 and the toroidal outlet 25 by a carrier gas, preferably by transporting the precursor as a mist (i.e. a gas mixture 21) through the radial inlet 19 and the toroidal outlet 25 by a carrier gas. For example, a release of the precursor at the toroidal outlet 25 provides a shield around the plasma at the core outlet, the shield preferably extending at least partially axially into the toroidal outlet 25.

It is understood that the system operates in a highly turbulent hydrodynamic regime. The plasma is swirling out of a nozzle. By using the above described nozzle 11, small amounts of precursor diluted in a carrier gas are preferably sufficient to deposit high quality, functional coatings (less oxidized polymers) on a substrate 27.

The precursor may be introduced either as a vapor or a mist. Vapor may be carried away simply by bubbling the carrier gas in a low boiling point precursor. A mist may allow the introduction of complex blends as well as the use of a much broader range of compounds, such as high molecular weight compounds like oligomers, polymers, or high boiling liquids, etc. Best results have been achieved when the viscosity of the liquid to be nebulized (pure precursor or blend of different precursors) is no more than 1.0 - 1.5 centiPoise (viscosity of water at 25°C is 1.0).

Plasma polymerizing a mist of precursor allows a mild deposition of coatings that are not over-crosslinked and that still contain substantial amounts of fragile reactive functionalities (such as C=C double bonds, other saturations depending on the precursor used, etc.) that may otherwise have been destroyed in a plasma polymerization of a vapor. Nevertheless, the person skilled in the art may use the above nozzle or any nozzle suitable for deposition of a plasma polymerized coating layer.

The atmospheric pressure plasma system deposes the plasma polymerized coating layer on the pretreated surface wherein the plasma polymerized coating layer comprises an adhesively effective amount of polymerized or partially polymerized sulfur-containing compound. By adhesively effective amount, it is meant that the coated surface will show increased adhesion to a cured rubber compound compared to a noncoated surface, as measured by a standard Peel Resistance of Adhesives test (T-Peel Test) described in ASTM D1876 - 08 (2015).

Thermal heating of the coated surface varies according to the gap between nozzle and surface to be coated as well as the torch scan velocity (the smaller the gap and/or the lower the torch scan velocity, the higher the temperature of the surface). Also, the gap between the nozzle and the surface to be treated has an impact on gas dynamics. A smaller gap results in a higher velocity of the gases escaping the surroundings of the nozzle. These effects have an influence on the quality of the bonding of the plasma coating to the surface to be coated. The gap is preferably ranging from 0.1 mm to 5 mm, from 0.5mm to 4 mm or from 0.7 mm to 3 mm.

The gases from the exit of the nozzle may form a spray pattern with an outer penumbra having mostly ionized gas whereas closer to the center of the spray pattern, there may be an area of higher concentration of coating material. The nozzle offset is the distance between 2 line-scans of the torch; i.e., at the end of a line scan, the torch displaces of the offset value before starting another line scan until the whole area of the sample has been scanned. Accordingly, the nozzle offset, i.e., the distance between two line-scans of the nozzle, is also a parameter that will affect the coating quality and efficiency. The nozzle offset is preferably ranging from 1 to 10 mm, from 1.5 mm to 8 mm or from 2 mm to 5 mm.

To obtain the desired thickness of the plasma coating, the plasma nozzle displacement velocity, and the number of plasma coating passes can be taken into account. The plasma nozzle displacement velocity is the line scan speed of the nozzle above the surface to be coated. It is preferably at least 1 m/min. It is preferably at most 20 m/min, at most 10 m/min, at most 8 m/min, or preferably at most 6 m/minute. It may be preferably within a range of 1 to 20 m/min, 1.5 to 10 m/min or 2 to 5 m/min.

The number of plasma coating passes will provide a variation of the thickness of the plasma polymerized coating layer and the homogeneity of the coating. A higher number of plasma coating passes results in higher coating homogeneity but increases the thickness of the coating. The preferred number of plasma coating passes is at most 3 plasma coating passes, and preferably at most 2 plasma coating passes. For example, the number of plasma coating passes may range from 1 to 5 or for example from 1 to 3. In an embodiment, the plasma polymerized coating layer is deposited in a single plasma coating pass.

The precursor carrier gas flow rate is another variable that may be adjusted to improve the coating operation. It is the flow of precursor carrier gas that is used to push the nebulized or vaporized precursor into the nozzle. An optimum flow rate is the minimum flow of precursor carrier gas that provides the best results. The precursor carrier flow rate is preferably ranging from 0.1 and 10 standard liters per minute (SLM) as the measure for gas at standard conditions for temperature and pressure defined at a temperature of 273.15 K (0°C, 32°F) and an absolute pressure of 1 atm (1.013 bar), more preferably from 0.1 and 5 SLM, and even more preferably from 0.2 and 4 SLM.

The flow rate of the gas mixture into the plasma treatment system to obtain a desired adhesively effective amount of polymerized or partially polymerized sulfur-containing compound onto the surface will depend on the desired gas velocity (e.g., in cm/s) passing perpendicular to a characteristic internal cross-sectional area of the plasma treatment system. The necessary flow rate may be determined by one skilled in the art without undue experimentation.

A rubber composition to be contacted with the coated surface of the structure preferably includes one or more rubbers or elastomers containing olefinic unsaturations. The phrases "rubber or elastomer containing olefinic unsaturation" or "diene-based elastomer" are intended to include both natural rubber and its various raw and reclaimed forms as well as various synthetic rubbers. In the present disclosure, the terms "rubber" and "elastomer" may be used interchangeably, unless otherwise described. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerizes with butadiene to form nitrile butadiene rubber (NBR)), methacrylic acid and styrene (the latter compound polymerizing with butadiene to form styrene-butadiene rubber (SBR)), as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubbers or elastomers utilized herein are one or more of polyisoprene (natural or synthetic), polybutadiene and SBR.

In an example, the rubber composition to be contacted with the coated surface may include at least one of methylene donors and methylene acceptors.

In one embodiment, the methylene donor is an N-substituted oxymethylmelamine, of the general formula: 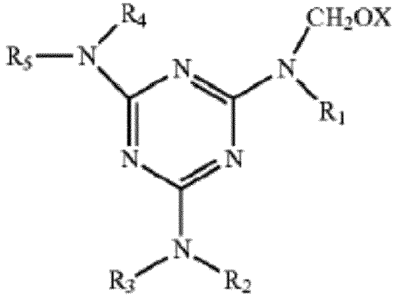 wherein X is hydrogen or an alkyl having from 1 to 8 carbon atoms, R1, R2, R3, R4 and R5 are individually selected from the group consisting of hydrogen, an alkyl having from 1 to 8 carbon atoms, the group -CH₂OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine. In one embodiment, the N-substituted oxymethylmelamine is hexamethoxymethylmelamine. The N-methylol derivatives of melamine are prepared by known processes.

The amount of N-substituted oxymethylmelamine in the rubber composition may vary. In one embodiment, the amount of N-substituted oxymethylmelamine ranges from 0.5 phr to 4 phr. In another embodiment, the amount of N-substituted oxymethylmelamine ranges from 1 phr to 3 phr. The N-substituted oxymethylmelamine may be added as the free compound, or dispersed on a carrier medium such as silica.

In one embodiment, the rubber composition includes a methylene acceptor. The term "methylene acceptor" is known to those skilled in the art and is used to describe the reactant to which a methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof. Examples of methylene acceptors include but are not limited to those disclosed in United States Patent 6,605,670; United States Patent 6,541,551; United States Patent 6,472,457; United States Patent 5,945,500; United States Patent 5,936,056; United States Patent 5,688,871; United States Patent 5,665,799; United States Patent 5,504,127; United States Patent 5,405,897; United States Patent 5,244,725; United States Patent 5,206,289; United States Patent 5,194,513; United States Patent 5,030,692; United States Patent o. 4,889,481; United States Patent 4,605,696; United States Patent 4,436,853; and United States Patent 4,092,455. The teachings of United States Patent 6,605,670; United States Patent 6,541,551; United States Patent 6,472,457; United States Patent 5,945,500; United States Patent 5,936,056; United States Patent 5,688,871; United States Patent 5,665,799; United States Patent 5,504,127; United States Patent 5,405,897; United States Patent 5,244,725; United States Patent 5,206,289; United States Patent 5,194,513; United States Patent 5,030,692; United States Patent o. 4,889,481; United States Patent 4,605,696; United States Patent 4,436,853; and United States Patent 4,092,455. Examples of modified phenol novolak resins include but are not limited to cashew nut oil-modified phenol novolak resin, tall oil-modified phenol novolak resin and alkyl modified phenol novolak resin. In one embodiment, the methylene acceptor is resorcinol.

Other examples of methylene acceptors include activated phenols by ring substitution and a cashew nut oil-modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc. under the designation SP6700. The modification rate of oil based on total novolak-type phenolic resin may range from 10 to 50 percent. For the production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber composition may vary. In one embodiment, the amount of methylene acceptor, if used, ranges from 0.5 phr to 5 phr. In another embodiment, the amount of methylene acceptor, if used, ranges from 1 phr to 3 phr.
In one embodiment, the rubber composition excludes a methylene acceptor. In one embodiment, the rubber composition excludes resorcinol (is free of resorcinol).

In an embodiment, the rubber composition is suitable for wire coating and/or comprises at least 25 weight percent of natural rubber based on the total weight of the rubber composition or for example, at least 40 weight percent or at least 50 weight percent. In another embodiment, the rubber composition comprises from 0.1 phr to 5 phr of a cobalt salt, and more preferably from 0.2 phr to 2 phr of a cobalt salt. This content may be of particular interest if used in wire coating compounds as it may amongst others improve the adhesion of the compound to a ply or shear band component including wires. The cobalt compound will typically be a cobalt salt of a fatty acid or a cobalt salt of an aliphatic or alicyclic carboxylic acid containing from 6 to 30 carbon atoms. Some representative examples of cobalt compounds which may be used include the cobalt salts, cobalt naphthanate, cobalt linoleate, cobalt stearate, cobalt oleate, cobalt acetate, cobalt neodecanoate, cobalt tallate, cobalt resinate, cobalt acetonate, or in situ salts prepared from cobalt hydroxide and an organic acid such as naphthenic acid, stearic acid, oleic acid, acetic acid, linoleic acid and the like. Additional cobalt compounds which may be used are known under the tradename Manoband^{™} C. Manoband^{™} C is a cobalt complex of an organic acid containing boron manufactured by Manchem Company. Manoband^{™} C is described in British Patent No. 972,804.

In one embodiment, the addition of carbon black comprises about 1 to 200 parts by weight of diene rubber (phr). In another embodiment, from about 10 to about 100 phr of carbon black is used. Several commercially available carbon blacks may be used. Included in, but not limited to, the list of carbon blacks are those known under the ASTM designations N299, N315, N326, N330, N332, N339, N343, N347, N351, N358, N375, N539, N550 and N582.

Silica, if used, may be used in an amount of 5 to 200 phr, preferably 5 to 100 phr, often with a silica coupling agent. Representative silicas may be, for example, hydrated amorphous silicas.

In one embodiment, the rubber composition may contain sulfur containing organosilicon compounds or silanes. Examples of suitable sulfur containing organosilicon compounds are of the formula:

Z - Alk - Sₙ - Alk - Z I

in which Z is selected from the group consisting of 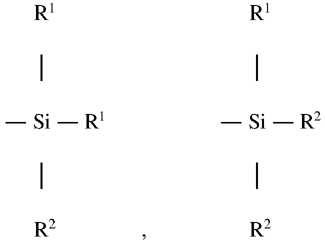 and 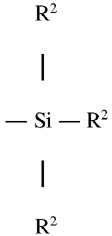
where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 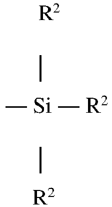
where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

Processing aids may be present and can include, for example, aromatic, naphthenic, and/or paraffinic processing oils. Typical amounts of tackifying resins, such as phenolic tackifiers, range from 1 phr to 3 phr.

The rubber compound may contain various conventional rubber additives. Typical amounts of antioxidants comprise about 1 phr to about 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), pages 343-362. Typical amounts of antiozonants comprise about 1 to about 5 phr. Representative antiozonants may be, for example, those disclosed in the Vanderbilt Rubber Handbook (1990), pages 363-367. Typical amounts of fatty acids, if used, which can include stearic acid comprise about 0.5 phr to about 3 phr. Typical amounts of waxes comprise about 1 phr to about 5 phr. Often microcrystalline waxes are used. Typical amounts of peptizers comprise about 0.1 phr to about 1 phr. Typical peptizers may be, for example, pentachlorothiophenol and dibenzamidodiphenyl disulfide.

In an embodiment of the present invention, the amount of zinc oxide may be relatively high as mentioned herein above.

It is readily understood by those having skill in the art that the rubber compositions used in tire components would be compounded by processes generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, carbon black. As known to those skilled in the art, depending on the intended use of the sulfur vulcanizable and sulfur vulcanized material (rubbers), the additives mentioned above are selected and commonly used in conventional amounts.

The vulcanization is conducted in the presence of a sulfur vulcanizing agent. Examples of suitable sulfur vulcanizing agents include insoluble sulfur, elemental sulfur (free sulfur) or sulfur donating vulcanizing agents, for example, an amine disulfide, polymeric polysulfide or sulfur olefin adducts. In one embodiment, the sulfur vulcanizing agent is elemental sulfur. In one embodiment, sulfur vulcanizing agents are used in an amount ranging from about 0.5 phr to about 8 phr. In another embodiment, about 3 phr to about 5 phr of sulfur vulcanizing agents are used.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from about 0.5 phr to about 2.5 phr. In another embodiment, combinations of two or more accelerators may be used, including a primary accelerator which is generally used in the larger amount (0.5 phr to 2.0 phr), and a secondary accelerator which is generally used in smaller amounts (0.05 phr to 0.50 phr) to activate and to improve the properties of the vulcanizate. Combinations of these accelerators have been known to produce a synergistic effect of the final properties and are somewhat better than those produced by the use of either accelerator alone. Also, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. In another embodiment, if a second accelerator is used, the secondary accelerator may be a guanidine, dithiocarbamate, thiuram, or a second sulfenamide. In one embodiment of this invention, the vulcanization (i.e. the co-vulcanization) is conducted at a temperature of at least 120°C and/or for a time of at least 20 minutes.

A process in accordance with an embodiment of the invention, is further described with reference to the following examples.

### Example 1

In this example, the effect of treating a strip of thermoplastic material with an atmospheric plasma generated by a dielectric barrier discharge is illustrated. The atmospheric pressure plasma system used had a nozzle as described in EP2326153.
A series of experiments exposing panels of thermoplastic material to plasma was performed. The plasma equipment was purchased from Plasmatreat GmbH, and consists of a portable plasma torch and plasma generator that is run at its maximum power.

The panel's size was 6 inches long and 1.5 inches wide, with a thickness of 1.5 mm. For each sample, a layer of wire coating rubber of a thickness of about 3 mm was sandwiched between 2 coated panels. A band of Mylar was placed between the two panels at one end to create an unbounded portion. The samples were put in mold for a cure at 155°C for 25 minutes at a pressure of 13 bar.

Each cured sample was then tested for adhesion to determine the average peel force. The method used was described in ASTM D1876 - 08 (2015) with the difference that the panels were 1.5 inches wide and 6 inches long but bounded over about 4.5 inches of their length. Thus, the unbounded ends were over about 1.5 inches of the panel's length. The test specimens were cuts from the centre portion of the panels to have a width of 1 inch.

The tests were performed using the following commercially available polyester-based thermoplastic elastomers: EM630 having a melting temperature of 212 °C as determined by ISO 11357-1/-3, a Durometer Shore D hardness of 60 as determined by ISO 868, a tensile modulus of 280 MPa as determined by ISO 527-1/-2 and a melt flow rate (MFR) 4 g / 10 min as determined by ISO 1133 (230°C- 2.16 kg); and HYTREL 6356 having a melting temperature of 210 °C as determined by ISO 11357-1/-3, a tensile modulus of 280 MPa as determined by ISO 527-1/-2 and a melt flow rate (MFR) 8.5 g / 10 min as determined by ISO 1133 (230°C- 2.16 kg).

### Fixed Parameters

For all experiments, the current was 8.4 A and the voltage was 287 V. The carrier gas was argon with a gas flow of 3 bar. The precursor was carbon disulfide (CS₂) and the precursor flow was 1 ml/min. The plasma frequency was 20 kHz. No acetylene precursor was used. The offset was set at 2 mm, the nozzle velocity was 2 m/min, and each of the samples was subjected to two plasma coating passes. The substrate temperature ranged from about 50°C to about 100°C. In any case, these experiments are summarized in Table 1.

| **Table 1 - Experiments Carried Out with Plasma Treatment/Coating** | | | | | |
|---|---|---|---|---|---|
| **Exp** | **Substrate** | **Pretreatment with Sandpaper** | **Prec. Carrier Gas Flow (SLM)** | **Gap** | **Average Peel Force** |
| S01 | 2xEM630 plates | P400 (manual) | 2 | 1.0 mm | 200 N |
| S02 | 2xEM630 plates | P400 (manual) | 4 | 1.0 mm | 250 N |
| S03 | 2xEM630 plates | P400 (manual) | 1 | 1.0 mm | 300 N |
| S04 | 2xEM630 plates | P400 (manual) | 2 | 1.0 mm | 250 N |
| S05 | 2xEM630 plates | P400 (manual)¹ | 2 | 1.7 mm | 300 N |
| S06 | 2x black Hytrel plates | P400 (manual)¹ | 2 | 1.7 mm | 275 N |
| S07 | 2x black Hytrel plates | P400 (manual)¹ | 2 | 1.7 mm | 240 N |
| S08 | 2x black Hytrel plates | P400 (manual)¹ | 2 | 2.0 mm | 525 N |

| | | | | | |
|---|---|---|---|---|---|
| ¹ After being mechanically polished. | | | | | |

Comparative experiments were performed wherein the surface was only pre-treated by roughening without plasma treatment/coating.

| **Table 2: Experiments carried out without plasma treatment/coating** | | | |
|---|---|---|---|
| **Exp.** | **Substrate** | **PRETREATMENT with sand paper** | **Average Peel Force (N)** |
| CS01 | 2xEM630 plates | sand paper P320 (automatic) | 20 N |
| CS02 | 2xPM581 plates | sand paper P320 (automatic) | 15 N |
| CS03 | 2xHytrel plates | sand paper P320 (automatic) | 10-15 N |

Based on a comparison of the results according to Tables 1 and 2, an improvement of the adhesion for samples treated with a plasma coating is observed, as demonstrated by the higher average peel force (at least 200 N) in the samples treated with plasma. Without using plasma, the average peel force is at most 20 N.

Other comparative experiments were performed using panels of PM581 and standard adhesive. The adhesion trials were less effective.

## Claims

1. A process for the production of a non-pneumatic tire (29) comprising a structure and a shear band (39), wherein the process comprises the steps of:
providing a structure (33) having a surface intended to be put in contact with a shear band (39) wherein the structure (33) comprises a thermoplastic material;
pretreating the surface of the structure (33) to obtain a pretreated surface; **characterised by**
providing an atmospheric pressure plasma generated from a gas mixture;
depositing a plasma polymerized coating layer from the atmospheric pressure plasma on the pretreated surface to produce a structure (33) with a coated surface comprising a plasma polymerized coating layer;
providing a shear band (39) with a layer of rubber material (41) and contacting the coated surface of the structure (33) with said layer of rubber material (41); and
co-vulcanizing the coated surface of the structure (33) with the layer of rubber material (41) of the shear band (39).

2. The process according to claim 1, wherein the surface intended to be put in contact with a shear band (39) comprises one or more plates, or one or more strips or a combination thereof, so that the surface intended to be put in contact with a shear band (39) is at least partially plane or annular.

3. The process according to claim 1 or 2, wherein the thermoplastic material is selected from one or more of thermoplastic elastomers, polyamides, polyesters, polyketones, polyurethanes, and polyaramids.

4. The process according to one or more of the preceding claims, wherein the thermoplastic material comprises at least one polyester-based thermoplastic elastomer having one or more of:
a Shore D Hardness ranging from 30 to 85 as determined by ISO 868;
a tensile modulus of at least 200 MPa as determined by ISO 527-1/-2; and
a melt flow rate ranging from 1 to 50 g / 10 min as determined by ISO 1133 (230°C - 2.16 kg).

5. The process according to one or more of the preceding claims, wherein the step of pretreating includes:
a sub-step of roughening the surface, optionally followed by one or more sub-steps selected from solvent cleaning and air plasma activation; and/or
a sub-step of air plasma activation, wherein the step of depositing a plasma polymerized coating layer from the atmospheric pressure plasma is performed at most 30 min after performing the sub-step of air plasma activation.

6. The process according to one or more of the preceding claims, wherein the step of depositing a plasma polymerized coating layer from the atmospheric pressure plasma is performed using an atmospheric pressure plasma system (1) comprising a nozzle (11), with one or more of:
a nozzle displacement velocity ranging from 1 to 20 m/min;
a nozzle offset ranging from 1 to 10 mm;
a gap between the nozzle and the pretreated surface ranging from 0.1 to 5 mm;
a number of plasma coating passes ranging from 1 to 5.

7. The process according to one or more of the preceding claims, wherein the step of depositing a plasma polymerized coating layer from the atmospheric pressure plasma is performed using an atmospheric pressure plasma system having a nozzle comprising a cylindrical body having a longitudinal axis and a bottom end, the body comprising a conical inlet coaxial with the longitudinal axis for receiving a plasma, a radial inlet for receiving a precursor material, a core outlet coaxial with the longitudinal axis for receiving plasma from the conical inlet and a toroidal outlet for receiving the precursor material from the radial inlet, wherein an inner sidewall of the toroidal outlet extends only a part of the way to the bottom end of the nozzle, and an outer sidewall of the toroidal outlet extends to the bottom end of the nozzle.

8. The process according to one or more of the preceding claims, wherein the gas mixture comprises a carrier gas and a precursor comprising one or more sulfur-containing compounds.

9. The process according to one or more of the preceding claims,
wherein the structure (33) is made of a composite material comprising a thermoplastic material and one or more fillers, and wherein the composite material is comprising at least 30 weight percent of thermoplastic material based on the total weight of the composite material; and/or
wherein the structure comprises a surface layer made of the thermoplastic material or of a composite material comprising the thermoplastic material wherein the surface layer is the surface intended to be put in contact with a shear band.

10. The process according to one or more of the preceding claims,
wherein the rubber material comprises one or more diene-based elastomers selected from a styrene butadiene rubber, a polybutadiene rubber, a natural rubber, a synthetic polyisoprene rubber or combinations thereof; and/or
wherein the rubber material is a rubber composition comprising at least 25 phr of natural rubber.

11. The process according to one or more of the preceding claims, wherein the step of co-vulcanizing the coated surface of the structure (33) with the layer of rubber material of the shear band (39) is carried out at a temperature of at least 120°C and for a time of at least 20 minutes.

12. The process according to one or more of the preceding claims, comprising a sub-step of cleaning the surface which is performed with a polar solvent.

13. The process according to one or more of the preceding claims, wherein the structure (3) comprises one or more annular strips forming one or more outer cylinders, the one or more outer cylinders being connected to an inner cylinder through a connecting structure comprising a plurality of connecting reinforcement members, and wherein the outside surface of one or more of the outer cylinders in the tire radial direction is the surface intended to be put in contact with the shear band (39).

14. The process according to one or more of the preceding claims, wherein the process is devoid of a step of application of a polyisocyanate adhesive.

15. A process for the co-vulcanization of i) a structure comprising a plate or a strip comprising a thermoplastic material with ii) a rubber material, which is a part of a non-pneumatic tire, wherein the process comprises the steps of:
providing a structure comprising a plate or a strip with a surface intended to be submitted to co-vulcanization, wherein the plate or the strip comprises a thermoplastic material that is selected from one or more of thermoplastic elastomers, polyamides, polyesters, polyketones, polyurethanes, and polyaramids;
pretreating the surface of the plate or the strip to obtain a pretreated surface, wherein the step of pretreating comprises a sub-step of roughening the surface, a sub-step of air plasma activation or a combination of those; **characterised by**
providing an atmospheric pressure plasma generated from a gas mixture, wherein the gas mixture comprises a carrier gas and a precursor comprising one or more sulfur-containing compounds and optionally an alkyne; and
depositing a plasma polymerized coating layer from the atmospheric pressure plasma on the pretreated surface to produce a plate or a strip with a coated surface comprising a plasma polymerized coating layer;
providing a rubber material comprising a diene-based elastomer and contacting a layer of said rubber material with the coated surface of the plate or the strip; and
performing a co-vulcanization of the plate or the strip with the rubber material, optionally at a temperature of at least 120°C and for a time of at least 20 minutes.

## Patentansprüche

1. Verfahren zur Herstellung eines nicht-pneumatischen Reifens (29), der eine Struktur und ein Scherband (39) umfasst, wobei das Verfahren die Schritte umfasst des:
Bereitstellens einer Struktur (33), die eine Oberfläche hat, die dazu bestimmt ist, mit einem Scherband (39) in Kontakt gebracht zu werden, wobei die Struktur (33) ein thermoplastisches Material umfasst;
Vorbehandelns der Oberfläche der Struktur (33), um eine vorbehandelte Oberfläche zu erhalten; **gekennzeichnet durch**
das Bereitstellen eines aus einem Gasgemisch erzeugten Atmosphärendruckplasmas;
das Aufbringen einer plasmapolymerisierten Beschichtungsschicht aus dem Atmosphärendruckplasma auf der vorbehandelten Oberfläche zur Herstellung einer Struktur (33), die eine beschichtete, mit einer plasmapolymerisierten Beschichtungsschicht versehene Oberfläche umfasst;
das Bereitstellen eines Scherbandes (39) mit einer Schicht aus Gummimaterial (41) und das Kontaktieren der beschichteten Oberfläche der Struktur (33) mit dieser Schicht aus Gummimaterial (41); und
das Co-Vulkanisieren der beschichteten Oberfläche der Struktur (33) mit der Schicht aus Gummimaterial (41) des Scherbandes (39).

2. Verfahren nach Anspruch 1, wobei die Oberfläche, die dazu bestimmt ist, mit einem Scherband (39) in Kontakt gebracht zu werden, eine oder mehrere Platten oder einen oder mehrere Streifen oder eine Kombination davon umfasst, sodass die Oberfläche, die dazu bestimmt ist, mit einem Scherband (39) in Kontakt gebracht zu werden, mindestens teilweise eben oder ringförmig ist.

3. Verfahren nach Anspruch 1 oder 2, wobei das thermoplastische Material aus einem oder mehreren von thermoplastischen Elastomeren, Polyamiden, Polyestern, Polyketonen, Polyurethanen und Polyaramiden ausgewählt ist.

4. Verfahren nach einem oder mehreren der vorhergehenden Ansprüche, wobei das thermoplastische Material mindestens ein auf Polyester basierendes thermoplastisches Elastomer umfasst, das eines oder mehrere von:
einer Shore D-Härte von 30 bis 85 gemäß ISO 868;
einem Zugmodul von mindestens 200 MPa gemäß ISO 527-1/-2; und
einer Schmelzflussrate von 1 bis 50 g / 10 min gemäß ISO 1133 (230°C - 2,16 kg) umfasst.

5. Verfahren nach einem oder mehreren der vorhergehenden Ansprüche, wobei der Schritt der Vorbehandlung:
einen Teilschritt einer Aufrauhung der Oberfläche, optional gefolgt von einem oder mehreren Teilschritten, die aus einer Lösungsmittelreinigung und einer Luftplasmaaktivierung ausgewählt sind, und/oder
einen Teilschritt einer Luftplasmaaktivierung, wobei der Schritt des Aufbringens einer plasmapolymerisierten Beschichtungsschicht aus dem Atmosphärendruckplasma höchstens 30 min nach Durchführung des Teilschritts der Luftplasmaaktivierung durchgeführt wird, umfasst.

6. Verfahren nach einem oder mehreren der vorhergehenden Ansprüche, wobei der Schritt des Aufbringens einer plasmapolymerisierten Beschichtungsschicht aus dem Atmosphärendruckplasma unter Verwendung eines Atmosphärendruckplasma-Systems (1), das eine Düse enthält, durchgeführt wird, wobei die Düse (11) eines oder mehrere von:
einer Düsenverdrängungsgeschwindigkeit im Intervall von 1 bis 20 m/min;
einem Düsenversatz im Intervall von 1 bis 10 mm;
einem Spalt zwischen der Düse und der vorbehandelten Oberfläche im Intervall von 0,1 bis 5 mm;
einer Anzahl von Plasmabeschichtungsdurchgängen im Intervall von 1 bis 5, umfasst.

7. Verfahren nach einem oder mehreren der vorstehenden Ansprüche, wobei der Schritt des Aufbringens einer plasmapolymerisierten Beschichtungsschicht aus dem Atmosphärendruckplasma unter Verwendung eines eine Düse umfassenden Atmosphärendruckplasma-Systems durchgeführt wird, wobei die Düse einen zylindrischen Körper hat, der eine Längsachse und ein unteres Ende aufweist, wobei der Körper einen konischen Einlass koaxial zur Längsachse zur Aufnahme eines Plasmas, einen radialen Einlass zur Aufnahme eines Vorläufermaterials, einen Kernauslass koaxial zur Längsachse zur Aufnahme von Plasma aus dem konischen Einlass und einen toroidalen Auslass zur Aufnahme des Vorläufermaterials aus dem radialen Einlass umfasst, wobei eine innere Seitenwand des toroidalen Auslasses sich nur teilweise bis zum unteren Ende der Düse erstreckt, und eine äußere Seitenwand des toroidalen Auslasses sich bis zum unteren Ende der Düse erstreckt.

8. Verfahren nach einem oder mehreren der vorhergehenden Ansprüche, wobei das Gasgemisch ein Trägergas und eine Vorstufe umfasst, die eine oder mehrere schwefelhaltige Verbindungen umfasst.

9. Verfahren nach einem oder mehreren der vorstehenden Ansprüche,
wobei die Struktur (33) aus einem Verbundwerkstoff besteht, der ein thermoplastisches Material und einen oder mehrere Füllstoffe umfasst, und wobei der Verbundwerkstoff mindestens 30 Gewichtsprozent thermoplastischen Materials auf der Grundlage des Gesamtgewichts des Verbundwerkstoffs umfasst; und/oder
wobei die Struktur eine Oberflächenschicht aus dem thermoplastischen Material oder aus einem das thermoplastische Material umfassenden Verbundwerkstoff umfasst, wobei die Oberflächenschicht die Oberfläche ist, die dazu bestimmt ist, mit einem Scherband in Kontakt gebracht zu werden.

10. Verfahren nach einem oder mehreren der vorstehenden Ansprüche,
wobei das Gummimaterial einen oder mehrere auf Dien basierenden Elastomere umfasst, die aus einem Styrolbutadienkautschuk, einem Polybutadienkautschuk, einem Naturkautschuk, einem synthetischen Polyisoprenkautschuk oder Kombinationen davon ausgewählt sind, und/oder
wobei das Gummimaterial eine Gummizusammensetzung, die mindestens 25 phr Naturkautschuk umfasst.

11. Verfahren nach einem oder mehreren der vorhergehenden Ansprüche, wobei der Schritt des Co-Vulkanisierens der beschichteten Oberfläche der Struktur (33) mit der Schicht aus Gummimaterial des Scherbandes (39) bei einer Temperatur von mindestens 120°C und für eine Zeit von mindestens 20 Minuten durchgeführt wird.

12. Verfahren nach einem oder mehreren der vorhergehenden Ansprüche, umfassend einen Teilschritt der Reinigung der Oberfläche, die mit einem polaren Lösungsmittel durchgeführt wird.

13. Verfahren nach einem oder mehreren der vorhergehenden Ansprüche, wobei die Struktur (3) einen oder mehrere Ringstreifen umfasst, die einen oder mehrere äußere Zylinder bilden, die einen oder mehrere äußere Zylinder mit einem inneren Zylinder durch eine Verbindungsstruktur verbunden sind, die mehrere verbindende Verstärkungselemente umfasst, und wobei die Außenfläche eines oder mehrerer der Außenzylinder in radialer Reifenrichtung die Fläche ist, die dazu bestimmt ist, mit dem Scherband (39) in Kontakt gebracht zu werden.

14. Verfahren nach einem oder mehreren der vorhergehenden Ansprüche, wobei das Verfahren ohne einen Schritt der Anwendung eines Polyisocyanatklebstoffs ist.

15. Verfahren zur Co-Vulkanisation von i) einer Struktur, umfassend eine Platte oder einen Streifen, die oder das ein thermoplastisches Material umfasst, mit ii) einem Gummimaterial, das Teil eines nicht-pneumatischen Reifens ist, wobei das Verfahren die Schritte umfasst des:
Bereitstellens einer Struktur, die eine Platte oder einen Streifen mit einer Oberfläche umfasst, die zur Co-Vulkanisation vorgesehen ist, wobei die Platte oder der Streifen ein thermoplastisches Material umfasst, das aus einem oder mehreren thermoplastischen Elastomeren, Polyamiden, Polyestern, Polyketone, Polyurethane und Polyaramide ausgewählt ist;
Vorbehandelns der Oberfläche der Platte oder des Streifens, um eine vorbehandelte Oberfläche zu erhalten, wobei der Vorbehandlungsschritt einen Teilschritt des Aufrauhens der Oberfläche, einen Teilschritt der Luftplasmaaktivierung oder eine Kombination davon umfasst, **gekennzeichnet durch**
das Bereitstellen eines aus einem Gasgemisch erzeugten Atmosphärendruckplasmas, wobei das Gasgemisch ein Trägergas und eine Vorstufe umfasst, die eine oder mehrere schwefelhaltige Verbindungen und gegebenenfalls ein Alkin enthält; und
das Aufbringen einer plasmapolymerisierten Beschichtungsschicht aus dem Atmosphärendruckplasma auf der vorbehandelten Oberfläche zur Herstellung einer Platte oder eines Streifens, die oder das eine beschichteten mit einer plasmapolymerisierte Beschichtungsschicht versehenen Oberfläche umfasst;
das Bereitstellen eines Gummimaterials, das ein auf Dien basierendes Elastomer umfasst, und das In-Kontaktbringen einer Schicht dieses Gummimaterials mit der beschichteten Oberfläche der Platte oder des Streifens;
das Durchführen einer Co-Vulkanisation der Platte oder des Streifens mit dem Gummimaterial, optional bei einer Temperatur von mindestens 120 °C und für eine Zeit von mindestens 20 Minuten.

## Revendications

1. Procédé destiné à la production d'un bandage non pneumatique (29) qui comprend une structure et une bande de cisaillement (39), dans lequel le procédé comprend les étapes dans lesquelles :
on procure une structure (33) qui possède une surface destinée à une mise en contact avec une bande de cisaillement (39), dans lequel la structure (33) comprend une matière thermoplastique ;
on soumet la surface de la structure (33) à un prétraitement afin d'obtenir une surface prétraitée ; **caractérisé par** le fait de :
procurer un plasma sous pression atmosphérique généré à partir d'un mélange de gaz ;
déposer une couche de revêtement polymérisée au plasma à partir du plasma sous pression atmosphérique sur la surface prétraitée afin d'obtenir une structure (33) munie d'une surface revêtue comprenant une couche de revêtement polymérisée au plasma ;
procurer une bande de cisaillement (39) qui comprend une couche de matière à base de caoutchouc (41) et mettre la surface revêtue de la structure (33) en contact avec ladite couche de matière à base de caoutchouc (41) ; et
procéder à une covulcanisation de la surface revêtue de la structure (33) avec la couche de matière à base de caoutchouc (41) de la bande de cisaillement (39).

2. Procédé selon la revendication 1, dans lequel la surface qui est destinée à être mise en contact avec une bande de cisaillement (39) comprend une ou plusieurs plaques, ou une ou plusieurs bandes ou une de leurs combinaisons, d'une manière telle que la surface destinée à une mise en contact avec une bande de cisaillement (39) est au moins en partie plane ou annulaire.

3. Procédé selon la revendication 1 ou 2, dans lequel la matière thermoplastique est choisie parmi une ou plusieurs des matières ci-après, à savoir des élastomères thermoplastiques, des polyamides, des polyesters, des polycétones, des polyuréthanes et des polyaramides.

4. Procédé selon une ou plusieurs des revendications précédentes, dans lequel la matière thermoplastique comprend au moins un élastomère thermoplastique à base d'un polyester qui possède une ou plusieurs des caractéristiques ci-après, à savoir :
une dureté Shore D qui se situe dans la plage allant de 30 à 85 comme déterminé par la norme ISO 868 ;
un module de traction s'élevant à au moins 200 MPa comme déterminé par la norme ISO 527-1/-2 ; et
un indice de fluidité à chaud qui se situe dans la plage allant de 1 à 50 g/10 minutes comme déterminé par la norme ISO 1133 (230 °C - 2,16 kg).

5. Procédé selon une ou plusieurs des revendications précédentes, dans lequel l'étape dans laquelle on procède à un prétraitement englobe :
une étape secondaire dans laquelle on rend rugueuse la surface, de manière facultative suivie d'une ou de plusieurs étapes secondaires qui sont choisies parmi un nettoyage au solvant et une activation par plasma à air ; et/ou
une étape secondaire d'activation par plasma à air ; dans laquelle l'étape dans laquelle on dépose une couche de revêtement polymérisée au plasma à partir du plasma sous pression atmosphérique est mise en oeuvre au moins 30 minutes après la mise en oeuvre de l'étape secondaire d'activation par plasma à air.

6. Procédé selon une ou plusieurs des revendications précédentes, dans lequel l'étape dans laquelle on dépose une couche de revêtement polymérisée au plasma à partir du plasma sous pression atmosphérique est mise en oeuvre en utilisant un système de plasma sous pression atmosphérique (1), qui comprend une buse (11) qui possède une ou plusieurs des caractéristiques indiquées ci-après, à savoir :
une vitesse de déplacement de la buse qui se situe dans une plage allant de 1 à 20 m/minute ;
un décalage de buse qui se situe dans une plage allant 1 à 10 mm ;
un espace ménagé entre la buse et la surface prétraitée qui se situe dans une plage allant de 0,1 à 5 mm ;
un nombre de passages du revêtement au plasma qui se situe dans une plage allant de 1 à 5.

7. Procédé selon une ou plusieurs des revendications précédentes, dans lequel l'étape dans laquelle on dépose une couche de revêtement polymérisée au plasma à partir du plasma sous pression asphérique est mise en oeuvre en utilisant un système de plasma sous pression atmosphérique qui possède une buse comprenant un corps cylindrique qui possède un axe longitudinal et une extrémité inférieure, le corps comprenant une entrée conique en position coaxiale avec l'axe longitudinal, destinée à la réception d'un plasma, une entrée radiale destinée à la réception d'une matière faisant office de précurseur, une sortie centrale en position coaxiale avec l'axe longitudinal, destinée à recevoir le plasma à partir de l'entrée conique et une sortie toroïdale destinée à recevoir la matière faisant office de précurseur à partir de l'entrée radiale, dans lequel une paroi latérale interne de la sortie toroïdale s'étend sur uniquement une partie de l'extrémité inférieure de la buse et une paroi latérale externe de la sortie toroïdale s'étend jusqu'à l'extrémité inférieure de la buse.

8. Procédé selon une ou plusieurs des revendications précédentes, dans lequel dans lequel le mélange de gaz comprend un gaz porteur et un précurseur comprenant un ou plusieurs composés contenant du soufre.

9. Procédé selon une ou plusieurs des revendications précédentes,
dans lequel la structure (33) est constituée d'un matériau composite qui comprend une matière thermoplastique et une ou plusieurs matières de charge, et dans lequel le matériau composite comprend au moins 30 % en poids de la matière thermoplastique en se basant sur le poids total du matériau composite ; et/ou
dans lequel la structure comprend une couche superficielle constituée de la matière thermoplastique ou d'un matériau composite comprenant la matière thermoplastique, dans lequel la couche superficielle représente la surface qui est destinée à une mise en contact avec une bande de cisaillement.

10. Procédé selon une ou plusieurs des revendications précédentes,
dans lequel la matière à base de caoutchouc comprend un ou plusieurs élastomères à base diénique qui sont choisis à partir d'un caoutchouc de styrène butadiène, un caoutchouc de polybutadiène, un caoutchouc naturel, un caoutchouc de polyisoprène synthétique ou leurs combinaisons ; et/ou
dans lequel la matière à base de caoutchouc représente une composition de caoutchouc qui comprend au moins 25 phr de caoutchouc naturel.

11. Procédé selon une ou plusieurs des revendications précédentes, dans lequel l'étape dans laquelle on procède à une covulcanisation de la surface revêtue de la structure (33) avec la couche de matière à base de caoutchouc de la bande de cisaillement (39) est mise en oeuvre à une température d'au moins 120 °C et pendant un laps de temps d'au moins 20 minutes.

12. Procédé selon une ou plusieurs des revendications précédentes, qui comprend une étape secondaire dans laquelle on procède à un nettoyage de la surface, qui est mis en oeuvre avec un solvant polaire.

13. Procédé selon une ou plusieurs des revendications précédentes, dans lequel la structure (3) comprend une ou plusieurs bandes annulaires qui forment un ou plusieurs cylindres externes, lesdits un ou plusieurs cylindres externes étant reliés à un cylindre interne par l'intermédiaire d'une structure de liaison qui comprend plusieurs éléments de renforcement effectuant une liaison, et dans lequel la surface externe desdits un ou plusieurs cylindres externes en direction radiale du bandage représentent la surface qui est destinée à une mise en contact avec la bande de cisaillement (39).

14. Procédé selon une ou plusieurs des revendications précédentes, dans lequel le procédé est exempt d'une étape d'application d'un adhésif à base de polyisocyanate.

15. Procédé pour la covulcanisation de i) une structure comprenant une plaque ou une bande qui comprend une matière thermoplastique avec ii) une matière à base de caoutchouc, qui fait partie d'un bandage non pneumatique, dans lequel le procédé comprend les étapes dans lesquelles :
on procure une structure qui comprend une plaque ou une bande munie d'une surface qui est destinée à être soumise à une covulcanisation, dans lequel la plaque ou la bande comprend une matière plastique qui est choisie parmi une ou plusieurs des matières ci-après, à savoir des élastomères thermoplastiques, des polyamides, des polyesters, des polycétones, des polyuréthanes et des polyaramides ;
on soumet la surface de la plaque ou de la bande à un prétraitement afin d'obtenir une surface prétraitée ; dans lequel l'étape prétraitement comprend une étape secondaire dans laquelle on rend rugueuse la surface, une étape secondaire d'activation par plasma à air ou une combinaison desdites étapes ; **caractérisé par** le fait de :
procurer un plasma sous pression atmosphérique généré à partir d'un mélange de gaz ; dans lequel le mélange de gaz comprend un gaz porteur et un précurseur qui comprend un ou plusieurs composés contenant du soufre et de manière facultative un alcyne ; et
déposer une couche de revêtement polymérisée au plasma à partir du plasma sous pression atmosphérique sur la surface prétraitée afin d'obtenir une plaque ou une bande munie d'une surface revêtue qui comprend une couche de revêtement polymérisée au plasma ;
procurer une matière à base de caoutchouc comprenant un élastomère à base diénique et mettre une couche de ladite matière à base de caoutchouc en contact avec la surface revêtue de la plaque ou de la bande ; et
mettre en oeuvre une covulcanisation de la plaque ou de la bande avec la matière à base de caoutchouc, de manière facultative à une température d'au moins 120 °C et pendant un laps de temps d'au moins 20 minutes.
